# FASCICULE DE BREVET EUROPEEN

(11) **EP 4 607 164 B1**
(45) Date de publication et mention de la délivrance du brevet: **22.07.2026**
(21) Numéro de dépôt: 25157228.5
(22) Date de dépôt: 11.02.2025
(51) Int. Cl.: G01K 1/14, F24D 3/08, F24D 11/00, F24H 1/18, F24H 9/06, F24H 15/223, F24H 15/225

(54) **DISPOSITIF SUPPORT POUR CAPTEUR, DISPOSITIF DE MESURE OU DE SUIVI DE TEMPÉRATURE POUR CONTENANT À LIQUIDE ET CONTENANT LES COMPRENANT**
TRÄGEREINRICHTUNG FÜR EINEN SENSOR, TEMPERATURMESS- ODER ÜBERWACHUNGSEINRICHTUNG FÜR EINEN FLÜSSIGKEITSBEHÄLTER UND BEHÄLTER MIT EINER SOLCHEN EINRICHTUNG
SUPPORT DEVICE FOR A SENSOR, TEMPERATURE MEASURING OR MONITORING DEVICE FOR A LIQUID CONTAINER AND CONTAINER COMPRISING THE SAME

(30) Priorité: 21.02.2024 FR 2401707
(43) Date de publication de la demande: 27.08.2025
(73) Titulaire: Viessmann Holding International GmbH, 35108 Allendorf (Eder) (DE)
(72) Inventeur: MANGIN, Arnaud, 57530 Courcelles-Chaussy (FR); KIRCH, Fabrice, 57380 Adelange (FR); SCHILLER, Manuel, 57385 Tritteling Redlach (FR)
(74) Mandataire: Ipsilon

(56) Documents cités:
- EP-A1- 3 842 774
- WO-A1-2015/103669
- DE-U1- 29 820 671

## Description

La présente invention concerne le domaine des contenants à liquides, en particulier ceux régulés en température, tels que les ballons d'eau chaude, ainsi que leurs accessoires et équipements, et a pour objets, un dispositif support pour capteur(s) de mesure ou de suivi de température, un dispositif de mesure ou de suivi de température pour contenant à liquide, un contenant à liquide comprenant au moins un tel dispositif de mesure et son procédé de fabrication.

De nombreuses réalisations de contenants à liquide thermorégulés, tels que des ballons à eau chaude, sont déjà connus et ils comprennent généralement une paroi interne formant un réservoir étanche, une paroi externe formant une enveloppe d'habillage et une couche intermédiaire de matériau isolant située entre les deux parois précitées et formé usuellement par expansion et solidification d'un mélange moussant injecté dans le volume interstitiel entre les deux parois. Ces contenants présentent traditionnellement une forme cylindrique circulaire et comportent aussi un dispositif de mesure ou de suivi de température, associé à des moyens de régulation de température et d'affichage qui exploitent les signaux qu'il délivre.

Ces dispositifs de mesure ou de suivi de température comprennent quant à eux, dans de nombreux cas, un tube plongeur, du type doigt de gant, au moins un capteur de mesure ou de suivi de température et un dispositif support comprenant un corps allongé et profilé en matière plastique. Le ou chaque capteur est reçu avec maintien par contrainte élastique et/ou friction dans au moins un logement sous forme de rainure longitudinale dudit corps allongé, ainsi qu'au moins une partie attenante de son câble de raccordement. Ce dispositif support est au moins partiellement monté avec emboîtement dans le tube plongeur avec mise en contact du ou de chaque capteur avec la paroi dudit tube et ce tube est monté sur le contenant de telle manière qu'il traverse les deux parois de ce dernier et qu'au moins une portion frontale fermée du tube plongeur soit située dans le réservoir pour être en contact avec le liquide présent dans ce dernier.

De tels dispositifs de mesure et de suivi de température sont par exemple connus des documents DE 298 20 671 et EP 3 842 774.

Toutefois, l'installation sur des contenants de ces types connus de dispositifs de mesure et de suivi de température, entraine notamment la mise en œuvre additionnelle de caches et/ou de moyens de fixation séparés. De plus, des phénomènes de condensation affectant les parties métalliques de ces dispositifs peuvent intervenir, du fait en particulier de l'absence de fermeture sur l'extérieur du doigt plongeur, et des bavures résultant de l'expansion de la mousse isolante peuvent apparaître.

La présente invention a pour but de pallier au moins les principaux de ces inconvénients.

A cet effet, l'invention a pour objet principal un dispositif support pour capteur(s) de mesure ou de suivi de température, destiné(s) à être monté(s) au moins partiellement dans un tube plongeur, ledit dispositif support comprenant un corps allongé et profilé en matière plastique, avec au moins un logement sous forme de rainure longitudinale pour la réception, préférentiellement avec maintien par contrainte élastique et/ou friction, d'au moins un capteur et pour le logement d'au moins une partie attenante de son câble de raccordement,
dispositif support caractérisé en ce que le corps allongé et profilé comporte, à l'une de ses extrémités, une partie en forme de plaque formée d'un seul tenant avec lui, s'étendant dans un plan perpendiculaire à l'axe longitudinal dudit corps et comportant au moins un orifice traversant aligné avec ladite au moins une rainure.

L'invention vise également un dispositif de mesure et de suivi de température et un contenant à liquide comprenant un tel dispositif support.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
[Fig. 1A] et [Fig. 1B] sont des vues respectivement en perspective et de dessus d'un contenant à liquide, du type ballon d'eau chaude, en accord avec un mode de réalisation de l'invention ;
[Fig. 2] représente une vue en coupe selon AA du contenant de la figure 1B ;
[Fig. 3] représente le détail B de la figure 2 à une échelle différente, montrant un dispositif de mesure et de suivi de température selon l'invention monté sur le contenant ;
[Fig. 4] est une vue en coupe selon CC et à une autre échelle du détail B de la figure 2 ;
[Fig. 5A] et [Fig. 5B] sont des vues en perspective selon deux directions différentes d'un premier mode de réalisation d'un dispositif support selon l'invention faisant partie du dispositif de mesure des figures 3 et 4 ;
[Fig. 6] représente le détail B de la figure 2 à une échelle différente, montrant un dispositif de mesure selon une variante constructive de l'invention monté sur le contenant ;
[Fig. 7A] et [Fig. 7B] sont des vues en perspective selon deux directions différentes d'un second mode de réalisation d'un dispositif support selon l'invention faisant partie du dispositif de mesure de la figure 6 ;
[Fig. 8] représente le détail B de la figure 2 à une échelle différente, montrant un dispositif de mesure selon une autre variante constructive de l'invention monté sur le contenant ;
[Fig. 9A] et [Fig. 9B] sont des vues en perspective selon deux directions différentes d'un troisième mode de réalisation d'un dispositif support selon l'invention faisant partie du dispositif de mesure de la figure 8 ;
[Fig. 10] représente le détail B de la figure 2 à une échelle différente, montrant un dispositif de mesure selon une autre variante constructive de l'invention monté sur le contenant ;
[Fig. 11A] et [Fig. 11B] sont des vues en perspective selon deux directions différentes d'un quatrième mode de réalisation d'un dispositif support selon l'invention faisant partie du dispositif de mesure de la figure 10 ;
[Fig. 12] représente une vue en coupe selon AA du contenant de la figure 1B en accord avec un autre mode de réalisation du dispositif de mesure et de suivi de température ;
[Fig. 13] représente le détail B de la figure 2 à une échelle différente, montrant plus précisément le dispositif de mesure et de suivi de température monté sur le contenant ;
[Fig. 14A] et [Fig. 14B] sont des vues en perspective selon deux directions différentes d'un quatrième mode de réalisation d'un dispositif support selon l'invention faisant partie du dispositif de mesure et de suivi de la température de la figure 12 ;
[Fig. 15A] et [Fig. 15B] sont des vues respectivement en perspective et en coupe d'une pièce d'entretoisement faisant office de passe-paroi étanche et de pallier de montage traversant, pour le dispositif de mesure et de suivi de température faisant partie du contenant représenté figures 2 à 4.

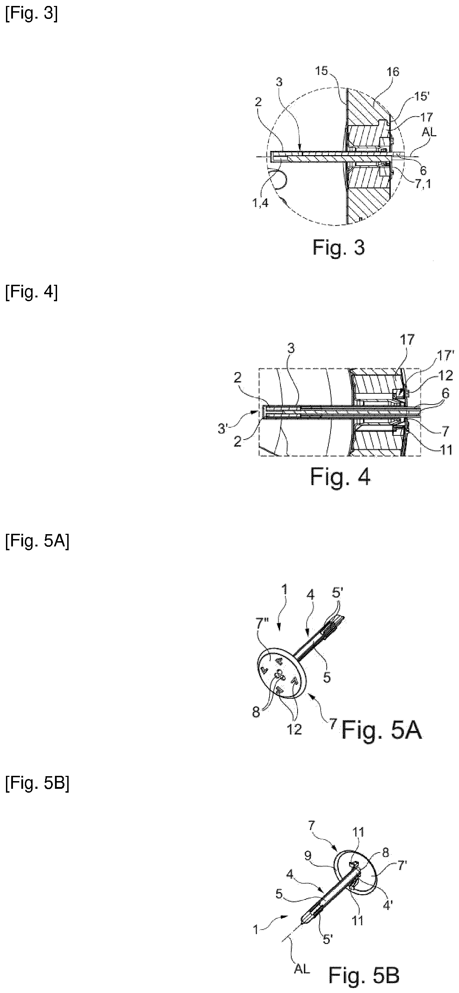

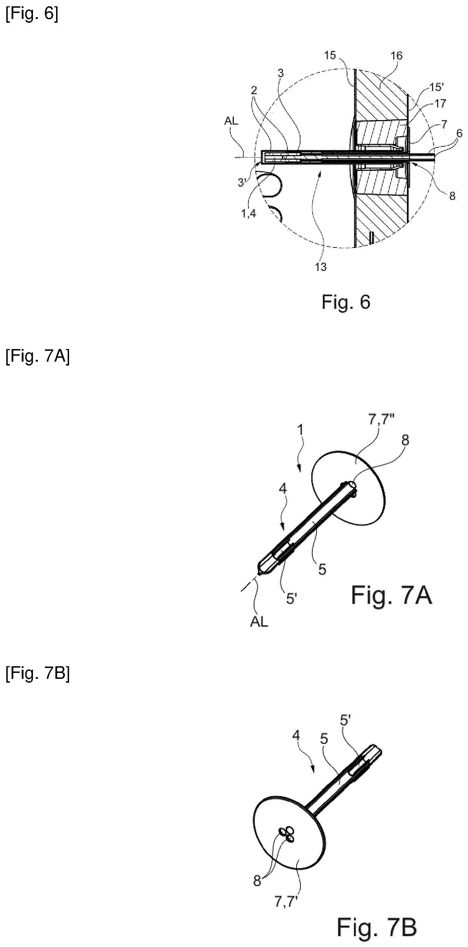

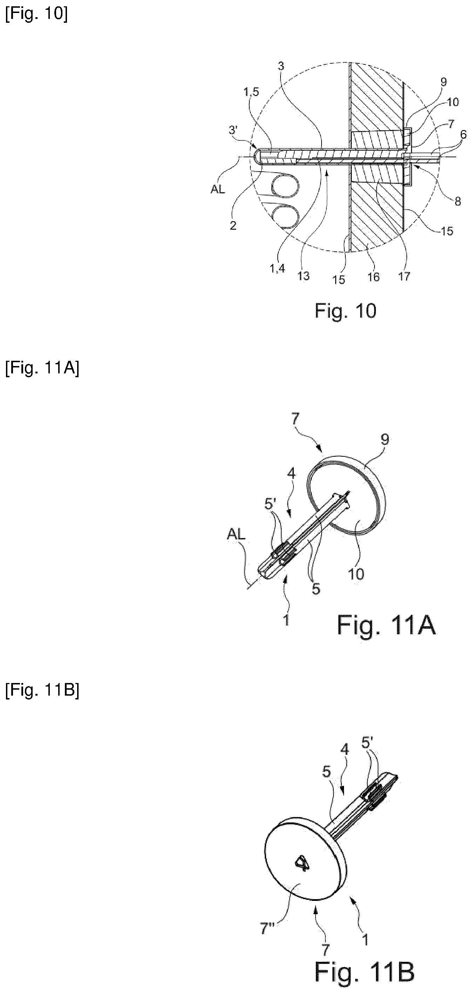

Les figures 5, 7, 9, 11 et 14 montrent, en relation avec les autres figures et en accord avec différents modes de réalisation de l'invention, un dispositif support (1) pour capteur(s) (2) de mesure ou de suivi de température, destiné(s) à être monté(s) au moins partiellement dans un tube plongeur (3), ledit dispositif support (1) comprenant un corps (4) allongé et profilé en matière plastique, avec au moins un logement (5) sous forme de rainure longitudinale pour la réception, préférentiellement avec maintien par contrainte élastique et/ou friction, d'au moins un capteur (2) et pour le logement d'au moins une partie attenante de son câble de raccordement (6).

Conformément à l'invention, le corps allongé et profilé (4) comporte, à l'une de ses extrémités (4'), une partie (7) en forme de plaque formée d'un seul tenant avec lui, s'étendant dans un plan perpendiculaire à l'axe longitudinal (AL) dudit corps (4) et comportant au moins un orifice traversant (8) aligné avec ladite au moins une rainure (5).

Grâce à ces dispositions, l'invention fournit un dispositif de support (1) sous la forme d'une pièce unique et de construction simple, permettant de surmonter les inconvénients mentionnés précédemment. En plus de ses fonctions de cache et d'obturateur, le corps en forme de plaque (7) sert également, d'une part, de butée pour un positionnement précis et calé du dispositif, d'autre part, d'aide à la manipulation et à l'introduction du dispositif, et, enfin, de passe et de guide câble. Par ailleurs, ladite plaque (7) ajourée peut aussi participer favorablement au maintien en position du ou des ensemble(s) capteur (2) - câble (6) à la suite de leur prémontage sur le dispositif de support (1), avant leur introduction dans un tube plongeur (3).

Avantageusement, le corps allongé et profilé (4) comporte au moins deux, préférentiellement trois, rainures longitudinales (5), de sections identiques ou non et réparties angulairement autour de l'axe longitudinal (AL), logeant avantageusement chacune un capteur (2), la partie en forme de plaque (7) comportant autant d'orifices traversants (8), dont chacun est aligné avec une rainure (5) respectivement.

En vue d'assurer un maintien en position libérable du capteur (2), et le cas échéant de son câble (6), préférentiellement sous contrainte élastique, le ou chaque logement (5) comporte au moins un site (5') de montage par clipsage d'un capteur (2). Ces clips (5') peuvent être directement moulés dans les rainures (5) et constituer des surépaisseurs permettant d'assurer que les capteurs (2) sont au contact de la face interne de la paroi métallique du tube plongeur (3) au moins à ces endroits.

Bien que d'autres formes soient possibles, et en fonction aussi de critères d'apparence et d'esthétisme, la partie en forme de plaque (7) présente préférentiellement une forme circulaire, donc discoïdale.

Afin d'éviter les épanchements de mousse de l'intérieur vers l'extérieur (apparents sur l'habillage du contenant) et les infiltrations d'eau de l'extérieur vers l'intérieur du tube plongeur (3), la partie (7) en forme de plaque comporte avantageusement une jupe périphérique (9) sur sa face (7') attenante au corps allongé (4), ladite jupe (9) constituant ou se terminant par un joint à lèvre. Cette jupe ou lèvre se déforme élastiquement et peut ainsi épouser la forme extérieure du contenant (14) sur lequel le dispositif support (1) est monté.

En variante, ladite partie (7) peut comporter un joint de compression périphérique, monté dans une rainure par exemple.

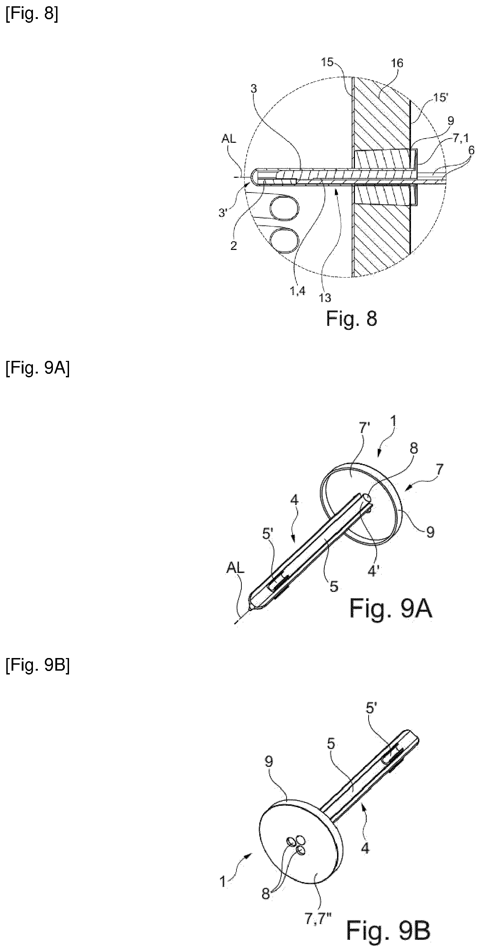

Selon une autre caractéristique possible de l'invention et comme le montrent les figures 8, 10 et 11, le dispositif support (1) peut comprendre également une rondelle d'étanchéité (10) montée sur le corps allongé (4) et contre la partie en forme de plaque (7), et le cas échéant à l'intérieur d'une jupe périphérique (9) de cette partie (7), ladite rondelle (10) obturant élastiquement l'orifice ou les orifices traversant(s) (8) de ladite partie en forme de plaque (7).

Cette rondelle (10) peut le cas échéant s'additionner à une jupe (9) formant lèvre d'étanchéité périphérique et présenter des découpes en forme de croix ou d'étoile complémentaire de la forme de la section du corps allongé (4) avec les rainures (5).

En vue d'assurer un montage facile et une solidarisation sûre du dispositif support (1) dans le tube plongeur (3) et sur le contenant (14), sans nécessiter de pièce additionnelle, il peut être prévu que la partie en forme de plaque (7) comporte, sur sa face (7') attenante au corps allongé (4), des crochets (11) formés d'un seul tenant avec cette partie (7) (figures 4 et 5B). Ces crochets (11) peuvent notamment venir en engagement avec une pièce d'entretoisement (17) pourvus de sites (17') complémentaires d'accrochage.

Afin de pouvoir facilement déplacer en rotation le dispositif support (1) autour de l'axe (AL), par exemple en vue de l'orientation des capteurs (2) ou de l'engagement ou du désengagement des crochets (11) précités par rapport à leurs sites, il peut être prévu que la partie en forme de plaque (7) comporte sur sa face (7") opposée au corps allongé (4) au moins un site d'accrochage (12) pour un entrainement de cette partie (4) en rotation autour de l'axe longitudinal (AL) du corps allongé (4) (voir figure 5A). Ces sites peuvent par exemple être des formations saillantes, orientées rotationnellement tels que des V ou des chevrons.

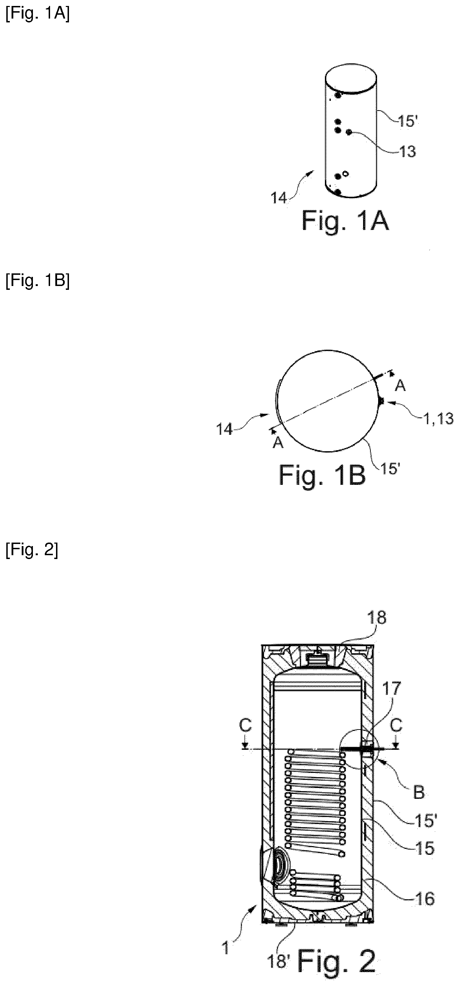

L'invention concerne aussi, comme le montrent à titre d'exemples les figures 1 à 3, 6, 8, 10, 12 et 13, un dispositif (13) de mesure ou de suivi de température pour contenant à liquide (14), notamment du type ballon d'eau chaude. Ce dispositif (13) comprend un tube plongeur (3), du type doigt de gant, au moins un capteur (2) de mesure ou de suivi de température et un dispositif support (1) comprenant un corps (4) allongé et profilé en matière plastique, ledit ou chaque capteur (2) étant reçu avec maintien par contrainte élastique et/ou friction dans au moins un logement (5) sous forme de rainure longitudinale dudit corps allongé (4), ainsi qu'au moins une partie attenante de son câble de raccordement (6), ledit dispositif support (1) étant au moins partiellement monté avec emboîtement dans le tube plongeur (3) avec mise en contact du ou de chaque capteur (2) avec la paroi dudit tube (3).

Conformément à l'invention, ce dispositif de mesure ou de suivi (13) est caractérisé en ce que le dispositif support (1) est un dispositif support tel que décrit ci-dessus.

En accord avec un mode de réalisation favorable de l'invention, le dispositif de mesure ou de suivi (13) comprend au moins deux, avantageusement trois, capteurs (2), identiques ou non et logés chacun dans une rainure longitudinale correspondante (5). En présence de trois capteurs (2), ces derniers peuvent par exemple être utilisés comme suit : un premier capteur fournit un signal de mesure servant à la régulation, un second capteur fournit un signal de mesure servant à l'affichage et un troisième capteur fournit un signal de mesure constituant une mesure de sécurité ou de vérification redondante.

En accord avec une première variante constructive, illustrée sur les figures 3, 6, 8 et 10 notamment, le corps (4) allongé et profilé est situé en totalité dans le tube plongeur (3).

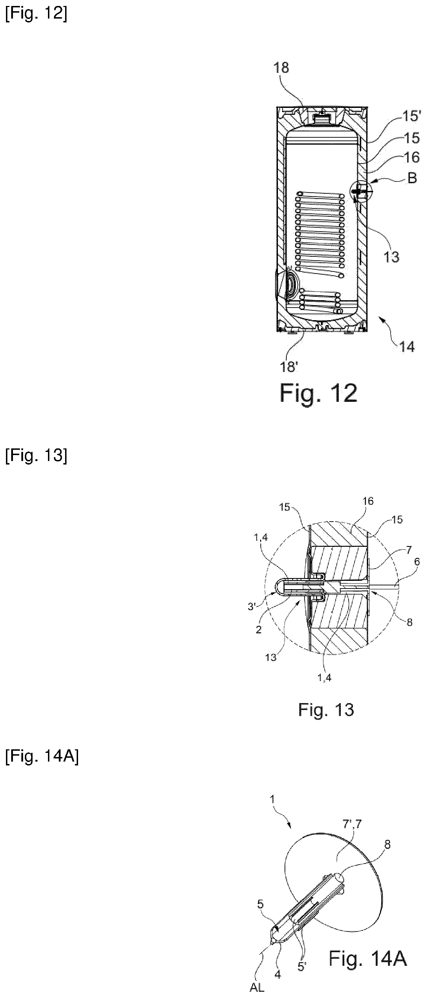

En accord avec une seconde variante constructive, illustrée sur la figure 13, seule une partie du corps (4) allongé et profilé est situé dans le tube plongeur (3), au moins la partie recevant le ou les capteur(s) (2).

L'invention porte également, comme le montrent les figures 1, 2 et 12, sur un contenant à liquide (14), notamment ballon d'eau chaude, comprenant une paroi interne formant un réservoir étanche (15), une paroi externe formant une enveloppe d'habillage (15') et une couche intermédiaire de matériau isolant (16) située entre les deux parois (15, 15') précitées, par exemple une mousse polyuréthanne. Ce contenant (14) est équipé d'au moins un dispositif (13) de mesure ou de suivi de température comprenant un tube plongeur (3), du type doigt de gant, au moins un capteur (2) de mesure ou de suivi de température et un dispositif support (1) avec un corps (4) allongé et profilé recevant ledit ou chaque capteur (2) dans au moins un logement (5), ainsi qu'au moins une partie attenante de son câble de raccordement (6). Le dispositif support (1) est au moins partiellement monté avec emboîtement dans le tube plongeur (3), ce avec mise en contact du ou de chaque capteur (2) avec la paroi interne dudit tube (3), et le dispositif (13) de mesure ou de suivi de température est installé sur ledit contenant (14) de telle manière qu'il traverse les deux parois (15, 15') de ce dernier et qu'au moins une portion frontale fermée (3') du tube plongeur (3) soit située dans le réservoir (15).

Conformément à l'invention, le ou chaque dispositif (13) de mesure ou de suivi de température est un dispositif tel que décrit ci-dessus et la partie en forme de plaque (7) du ou de chaque dispositif support (1) faisant partie du ou de chaque dispositif de mesure ou de suivi de température (13) est en appui, préférentiellement sous pression, contre la face externe de l'enveloppe d'habillage (15').

On obtient ainsi un montage non seulement calé mécaniquement et étanche, mais également d'apparence esthétique.

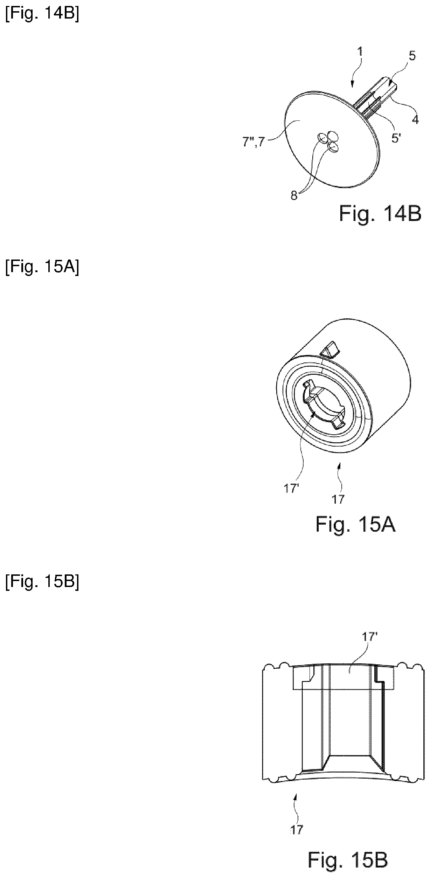

En accord avec une construction favorable, illustrée par exemple sur les figures 15, en relation avec les figures 3, 4, 6, 8, 10 et 13, le contenant à liquide (14) peut comprendre une pièce d'entretoisement (17) disposée entre les parois interne et externe (15 et 15') et faisant office de passe-paroi étanche et de palier de montage traversant pour le dispositif (13) de mesure et de suivi de température, cette pièce (17) délimitant un volume étanche autour de la partie du tube plongeur (3) et/ou du corps (4) allongé et profilé s'étendant entre ces deux parois (15 et 15'). Cette pièce (17) empêche notamment une éventuelle fuite de mélange moussant en expansion lors de la réalisation de la couche de matériau isolant (16) entre le réservoir et la paroi, grâce par exemple à une double barrière d'étanchéité (joints de compression concentriques-voir figures 15A et 15B) autour des orifices de passage du tube plongeur (3) au niveau des parois interne et externe (15 et 15').

Comme cela ressort des figures 3 à 5 et 15 considérées ensemble, il peut être prévu que la partie en forme de plaque (7) comporte, sur sa face (7') attenante au corps allongé (4), au moins deux crochets (11) formés d'un seul tenant avec cette partie (7), et que la pièce d'entretoisement (17) comprend un site d'accrochage (17') pour lesdits crochets (11), par exemple sous la forme d'une plaque découpée, de manière à réaliser conjointement une liaison amovible à baïonnettes, verrouillable et déverrouillable par rotation de ladite partie en forme de plaque (7), ladite liaison crochets (11)-site (17') assurant une application par sollicitation élastique de la partie sous forme de plaque (7) contre la paroi externe formant enveloppe d'habillage (15') à l'état verrouillé de ladite liaison. La rotation entre position verrouillée et position déverrouillée peut par exemple être de 90°. La plaque découpée formant site d'accrochage (17') peut être réalisée en un matériau présentant une densité/dureté supérieure au matériau du reste de la pièce, bien qu'éventuellement de même nature.

Comme indiqué précédemment, il peut en outre être prévu que la partie en forme de plaque (7) présente une forme circulaire et comporte une jupe périphérique (9) sur sa face (7') attenante au corps allongé (4), ladite jupe (9) constituant ou se terminant par un joint à lèvre et renfermant le cas échéant une rondelle d'étanchéité (10) montée sur le corps allongé (4) et entre la paroi externe formant enveloppe d'habillage (15') et la partie en forme de plaque (7).

Le dimensionnement des crochets (11) est avantageusement tel que la jupe (9) est appliquée sous pression contre la paroi d'habillage (15') à l'état verrouillé du dispositif support (1) : elle se déforme élastiquement et épouse le galbe extérieur de cette paroi. Ces crochets (11) participent aussi au maintien en place du dispositif de mesure (13) en cas d'effort exercé sur les câbles (6), par exemple dans le cas d'un accrochage par une personne passant à proximité du contenant.

Enfin, l'invention concerne un procédé de fabrication consistant essentiellement à fournir un réservoir étanche (15), équipé des différents raccords pour le chauffage et l'alimentation et l'évacuation de liquide, à mettre en place un tube plongeur (3) et une pièce d'entretoisement (17) avec un passage adapté pour le tube (3), à fournir et à enfiler sur ledit réservoir (15) une paroi externe formant enveloppe d'habillage (15'), laquelle comporte des ouvertures de passage adéquates pour les raccords et le tube plongeur (3) et/ou la pièce d'entretoisement (17), à mettre en place des couvercles supérieur (18) et inférieur (18') pour fermer l'enveloppe d'habillage (15'), et à injecter une matière moussante destinée à s'expanser et à former une couche intermédiaire de matériau isolant (16) entre les deux parois (15, 15') précitées, par exemple une mousse polyuréthanne.

Selon l'invention, ce procédé consiste également à mettre en place par introduction à travers la pièce d'entretoisement (17) et par emboitement au moins partiel dans le tube plongeur (3), et éventuellement à verrouiller en position par rotation, un dispositif support (1) tel que décrit précédemment, lequel est équipé d'au moins un, préférentiellement de plusieurs, capteur(s) (2) de mesure ou de suivi de température.

Ce procédé de fabrication permet de réaliser le contenant (14) décrit ci-dessus.

## Revendications

1. Dispositif support (1) pour capteur(s) (2) de mesure ou de suivi de température, destiné(s) à être monté(s) au moins partiellement dans un tube plongeur (3), ledit dispositif support (1) comprenant un corps (4) allongé et profilé en matière plastique, avec au moins un logement (5) sous forme de rainure longitudinale pour la réception, préférentiellement avec maintien par contrainte élastique et/ou friction, d'au moins un capteur (2) et pour le logement d'au moins une partie attenante de son câble de raccordement (6),
dispositif support (1) **caractérisé en ce que** le corps allongé et profilé (4) comporte, à l'une de ses extrémités (4'), une partie (7) en forme de plaque formée d'un seul tenant avec lui, s'étendant dans un plan perpendiculaire à l'axe longitudinal (AL) dudit corps (4) et comportant au moins un orifice traversant (8) aligné avec ladite au moins une rainure (5).

2. Dispositif support selon la revendication 1, **caractérisé en ce que** le corps allongé et profilé (4) comporte au moins deux, préférentiellement trois, rainures longitudinales (5), de sections identiques ou non et réparties angulairement autour de l'axe longitudinal (AL), logeant avantageusement chacune un capteur (2), la partie en forme de plaque (7) comportant autant d'orifices traversants (8), dont chacun est aligné avec une rainure (5) respectivement.

3. Dispositif support selon la revendication 1 ou 2, **caractérisé en ce que** le ou chaque logement (5) comporte au moins un site (5') de montage par clipsage d'un capteur (2).

4. Dispositif support selon l'une quelconque des revendications 1 à 3, **caractérisé en ce que** la partie en forme de plaque (7) présente une forme circulaire et comporte une jupe périphérique (9) sur sa face (7') attenante au corps allongé (4), ladite jupe (9) constituant ou se terminant par un joint à lèvre.

5. Dispositif support selon l'une quelconque des revendications 1 à 4, **caractérisé en ce qu'**il comprend également une rondelle d'étanchéité (10) montée sur le corps allongé (4) et contre la partie en forme de plaque (7), et le cas échéant à l'intérieur d'une jupe périphérique (9) de cette partie (7), ladite rondelle (10) obturant élastiquement l'orifice ou les orifices traversant(s) (8) de ladite partie en forme de plaque (7).

6. Dispositif support selon l'une quelconque des revendications 1 à 5, caractérisé en ce la partie en forme de plaque (7) comporte sur sa face (7') attenante au corps allongé (4) des crochets (11) formés d'un seul tenant avec cette partie (7).

7. Dispositif support selon l'une quelconque des revendications 1 à 6, caractérisé en ce la partie en forme de plaque (7) comporte sur sa face (7") opposée au corps allongé (4) au moins un site d'accrochage (12) pour un entrainement de cette partie (4) en rotation autour de l'axe longitudinal (AL) du corps allongé (4).

8. Dispositif (13) de mesure ou de suivi de température pour contenant à liquide (14), notamment du type ballon d'eau chaude, comprenant un tube plongeur (3), du type doigt de gant, au moins un capteur (2) de mesure ou de suivi de température et un dispositif support (1) comprenant un corps (4) allongé et profilé en matière plastique, ledit ou chaque capteur (2) étant reçu avec maintien par contrainte élastique et/ou friction dans au moins un logement (5) sous forme de rainure longitudinale dudit corps allongé (4), ainsi qu'au moins une partie attenante de son câble de raccordement (6), ledit dispositif support (1) étant au moins partiellement monté avec emboîtement dans le tube plongeur (3) avec mise en contact du ou de chaque capteur (2) avec la paroi dudit tube (3),
dispositif de mesure ou de suivi (13) **caractérisé en ce que** le dispositif support (1) est un dispositif support selon l'une quelconque des revendications 1 à 7.

9. Dispositif (13) de mesure ou de suivi selon la revendication 8, **caractérisé en ce qu'**il comprend au moins deux, avantageusement trois, capteurs (2), identiques ou non et logés chacun dans une rainure longitudinale correspondante (5).

10. Dispositif (13) de mesure ou de suivi selon la revendication 8 ou 9, **caractérisé en ce que** seule une partie du corps (4) allongé et profilé est situé dans le tube plongeur (3), au moins la partie recevant le ou les capteur(s) (2).

11. Contenant à liquide (14), notamment ballon d'eau chaude, comprenant une paroi interne formant un réservoir étanche (15), une paroi externe formant une enveloppe d'habillage (15') et une couche intermédiaire de matériau isolant (16) située entre les deux parois (15, 15') précitées, par exemple une mousse polyuréthanne, ledit contenant (14) étant équipé d'au moins un dispositif (13) de mesure ou de suivi de température comprenant un tube plongeur (3), du type doigt de gant, au moins un capteur (2) de mesure ou de suivi de température et un dispositif support (1) avec un corps (4) allongé et profilé recevant ledit ou chaque capteur (2) dans au moins un logement (5), ainsi qu'au moins une partie attenante de son câble de raccordement (6), ledit dispositif support (1) étant au moins partiellement monté avec emboîtement dans le tube plongeur (3), ce avec mise en contact du ou de chaque capteur (2) avec la paroi interne dudit tube (3), le dispositif (13) de mesure ou de suivi de température étant installé sur ledit contenant (14) de telle manière qu'il traverse les deux parois (15, 15') de ce dernier et qu'au moins une portion frontale fermée (3') du tube plongeur (3) soit située dans le réservoir (15), contenant (14) **caractérisé en ce que** le ou chaque dispositif de mesure ou de suivi de température (13) est un dispositif selon l'une quelconque des revendications 8 à 10, et **en ce que** la partie en forme de plaque (7) du ou de chaque dispositif support (1) faisant partie du ou de chaque dispositif de mesure ou de suivi de température (13) est en appui, préférentiellement sous pression, contre la face externe de l'enveloppe d'habillage (15').

12. Contenant à liquide (14) selon la revendication 11, **caractérisé en ce qu'**il comprend une pièce d'entretoisement (17) disposée entre les parois interne et externe (15 et 15') et faisant office de passe-paroi étanche et de palier de montage traversant pour le dispositif (13) de mesure et de suivi de température, cette pièce (17) délimitant un volume étanche autour de la partie du tube plongeur (3) et/ou du corps (4) allongé et profilé s'étendant entre ces deux parois (15 et 15').

13. Contenant à liquide (14) selon la revendication 12, **caractérisé en ce que** la partie en forme de plaque (7) comporte, sur sa face (7') attenante au corps allongé (4), au moins deux crochets (11) formés d'un seul tenant avec cette partie (7) et **en ce que** la pièce d'entretoisement (17) comprend un site d'accrochage (17') pour lesdits crochets (11), par exemple sous la forme d'une plaque découpée, de manière à réaliser conjointement une liaison amovible à baïonnettes, verrouillable et déverrouillable par rotation de ladite partie en forme de plaque (7), ladite liaison crochets (11)-site (17') assurant une application par sollicitation élastique de la partie sous forme de plaque (7) contre la paroi externe formant enveloppe d'habillage (15') à l'état verrouillé de ladite liaison.

14. Contenant à liquide (14) selon l'une quelconque des revendications 11 à 13, **caractérisé en ce que** la partie en forme de plaque (7) présente une forme circulaire et comporte une jupe périphérique (9) sur sa face (7') attenante au corps allongé (4), ladite jupe (9) constituant ou se terminant par un joint à lèvre et renfermant le cas échéant une rondelle d'étanchéité (10) montée sur le corps allongé (4) et entre la paroi externe formant enveloppe d'habillage (15') et la partie en forme de plaque (7).

15. Procédé de fabrication d'un contenant à liquide (14) selon l'une quelconque des revendications 11 à 14, consistant essentiellement à fournir un réservoir étanche (15), équipé des différents raccords pour le chauffage et l'alimentation et l'évacuation de liquide, à mettre en place un tube plongeur (3) et une pièce d'entretoisement (17) avec un passage adapté pour le tube (3), à fournir et à enfiler sur ledit réservoir (15) une paroi externe formant enveloppe d'habillage (15'), laquelle comporte des ouvertures de passage adéquates pour les raccords et le tube plongeur (3) et/ou la pièce d'entretoisement (17), à mettre en place des couvercles supérieur (18) et inférieur (18') pour fermer l'enveloppe d'habillage (15'), et à injecter une matière moussante destinée à s'expanser et à former une couche intermédiaire de matériau isolant (16) entre les deux parois (15, 15') précitées, par exemple une mousse polyuréthanne,
procédé **caractérisé en ce qu'**il consiste également à mettre en place par introduction à travers la pièce d'entretoisement (17) et emboitement au moins partiel dans le tube plongeur (3), et éventuellement à verrouiller en position par rotation, un dispositif support (1) selon l'une quelconque des revendications 1 à 7, lequel est équipé d'au moins un, préférentiellement de plusieurs, capteur(s) (2) de mesure ou de suivi de température.

## Patentansprüche

1. Trägereinrichtung (1) für einen oder mehrere Sensor(en) (2) zur Temperaturmessung oder -überwachung, der (die) dazu bestimmt ist (sind), zumindest teilweise in einem Tauchrohr (3) montiert zu sein, wobei die Trägereinrichtung (1) einen länglichen und profilierten Körper (4) aus Kunststoff umfasst, mit mindestens einer Aufnahme (5) in Form einer Längsnut zum Aufnehmen mindestens eines Sensors (2), vorzugsweise mit Halt durch elastische Beanspruchung und/oder Reibung, und zum Aufnehmen mindestens eines angrenzenden Teils seines Anschlusskabels (6),
wobei die Trägereinrichtung (1) **dadurch gekennzeichnet ist, dass** der längliche und profilierte Körper (4) an einem seiner Enden (4') einen plattenförmigen Teil (7) aufweist, der einstückig mit ihm ausgebildet ist, sich in einer zur Längsachse (AL) des Körpers (4) senkrechten Ebene erstreckt und mindestens eine Durchgangsöffnung (8) aufweist, die mit der mindestens einen Nut (5) fluchtet.

2. Trägereinrichtung nach Anspruch 1, **dadurch gekennzeichnet, dass** der längliche und profilierte Körper (4) mindestens zwei, vorzugsweise drei, Längsnuten (5) mit identischen oder nicht identischen Querschnitten aufweist, die winkelmäßig um die Längsachse (AL) verteilt sind und vorteilhafterweise jeweils einen Sensor (2) aufnehmen, wobei der plattenförmige Teil (7) ebenso viele Durchgangsöffnungen (8) aufweist, von denen jede mit jeweils einer Nut (5) fluchtet.

3. Trägereinrichtung nach Anspruch 1 oder 2, **dadurch gekennzeichnet, dass** die bzw. jede Aufnahme (5) mindestens eine Stelle (5') zur Clip-Montage eines Sensors (2) aufweist.

4. Trägereinrichtung nach einem der Ansprüche 1 bis 3, **dadurch gekennzeichnet, dass** der plattenförmige Teil (7) eine Kreisform hat und auf seiner an den länglichen Körper (4) angrenzenden Seite (7') eine Umfangsschürze (9) aufweist, wobei die Schürze (9) eine Lippendichtung bildet oder in einer solchen endet.

5. Trägereinrichtung nach einem der Ansprüche 1 bis 4, **dadurch gekennzeichnet, dass** sie außerdem eine Dichtungsscheibe (10) umfasst, die am länglichen Körper (4) und gegen den plattenförmigen Teil (7) und gegebenenfalls im Inneren einer Umfangsschürze (9) dieses Teils (7) montiert ist, wobei die Scheibe (10) die Durchgangsöffnung(en) (8) des plattenförmigen Teils (7) elastisch verschließt.

6. Trägereinrichtung nach einem der Ansprüche 1 bis 5, **dadurch gekennzeichnet, dass** der plattenförmige Teil (7) auf seiner an den länglichen Körper (4) angrenzenden Seite (7') Haken (11) aufweist, die einstückig mit diesem Teil (7) ausgebildet sind.

7. Trägereinrichtung nach einem der Ansprüche 1 bis 6, **dadurch gekennzeichnet, dass** der plattenförmige Teil (7) auf seiner dem länglichen Körper (4) entgegengesetzten Seite (7") mindestens eine Befestigungsstelle (12) für den drehenden Antrieb dieses Teils (4) um die Längsachse (AL) des länglichen Körpers (4) aufweist.

8. Einrichtung (13) zur Temperaturmessung oder - überwachung für einen Flüssigkeitsbehälter (14), insbesondere vom Typ Warmwasserbehälter, umfassend ein Tauchrohr (3) vom Typ Schutzrohr, mindestens einen Sensor (2) zur Temperaturmessung oder -überwachung und eine Trägereinrichtung (1), die einen länglichen und profilierten Körper (4) aus Kunststoff umfasst, wobei der bzw. jeder Sensor (2) mit Halt durch elastische Beanspruchung und/oder Reibung in mindestens einer Aufnahme (5) in Form einer Längsnut des länglichen Körpers (4) aufgenommen ist, ebenso wie zumindest ein angrenzender Teil seines Anschlusskabels (6), wobei die Trägereinrichtung (1) zumindest teilweise mit Einpassung in das Tauchrohr (3) montiert ist, wobei der bzw. jeder Sensor (2) mit der Wand des Rohrs (3) in Kontakt gebracht wird,
wobei die Mess- oder Überwachungseinrichtung (13) **dadurch gekennzeichnet ist, dass** die Trägereinrichtung (1) eine Trägereinrichtung nach einem der Ansprüche 1 bis 7 ist.

9. Mess- oder Überwachungseinrichtung (13) nach Anspruch 8, **dadurch gekennzeichnet, dass** sie mindestens zwei, vorteilhafterweise drei, Sensoren (2) umfasst, die identisch oder nicht identisch sind und jeweils in einer entsprechenden Längsnut (5) aufgenommen sind.

10. Mess- oder Überwachungseinrichtung (13) nach Anspruch 8 oder 9, **dadurch gekennzeichnet, dass** sich nur ein Teil des länglichen und profilierten Körpers (4) im Tauchrohr (3) befindet, zumindest der Teil, der den bzw. die Sensor(en) (2) aufnimmt.

11. Flüssigkeitsbehälter (14), insbesondere Warmwasserbehälter, umfassend eine Innenwand (15), die einen dichtes Reservoir bildet, eine Außenwand (15'), die eine Verkleidungshülle bildet, und eine zwischen den beiden vorgenannten Wänden (15, 15') befindliche Zwischenschicht (16) aus Isoliermaterial, beispielsweise einen Polyurethanschaum, wobei der Behälter (14) mit mindestens einer Einrichtung (13) zur Temperaturmessung oder -überwachung ausgestattet ist, die ein Tauchrohr (3) vom Typ Schutzrohr, mindestens einen Sensor (2) zur Temperaturmessung oder -überwachung und eine Trägereinrichtung (1) mit einem länglichen und profilierten Körper (4), der in mindestens einer Aufnahme (5) den bzw. jeden Sensor (2) sowie zumindest einen angrenzenden Teil seines Anschlusskabels (6) aufnimmt, umfasst, wobei die Trägereinrichtung (1) zumindest teilweise mit Einpassung in das Tauchrohr (3) montiert ist, wobei der bzw. jeder Sensor (2) mit der Innenwand des Rohrs (3) in Kontakt gebracht wird, wobei die Einrichtung (13) zur Temperaturmessung oder - überwachung so am Behälter (14) installiert ist, dass sie die beiden Wände (15, 15') des Letztgenannten durchdringt und dass sich mindestens ein vorderer geschlossener Abschnitt (3') des Tauchrohrs (3) im Reservoir (15) befindet,
wobei der Behälter (14) **dadurch gekennzeichnet ist, dass** die bzw. jede Einrichtung (13) zur Temperaturmessung oder -überwachung eine Einrichtung nach einem der Ansprüche 8 bis 10 ist, und dadurch, dass der plattenförmige Teil (7) der bzw. jeder Trägereinrichtung (1), der Teil der bzw. jeder Einrichtung (13) zur Temperaturmessung oder - überwachung ist, an der Außenseite der Verkleidungshülle (15') anliegt, vorzugsweise unter Druck.

12. Flüssigkeitsbehälter (14) nach Anspruch 11, **dadurch gekennzeichnet, dass** er ein Distanzstück (17) umfasst, das zwischen der Innen- und der Außenwand (15 und 15') angeordnet ist und als dichte Wanddurchführung und durchgehendes Montagelager für die Einrichtung (13) zur Temperaturmessung und -überwachung dient, wobei das Stück (17) ein dichtes Volumen um den Teil des Tauchrohrs (3) und/oder des länglichen und profilierten Körpers (4), der sich zwischen diesen beiden Wänden (15 und 15') erstreckt, begrenzt.

13. Flüssigkeitsbehälter (14) nach Anspruch 12, **dadurch gekennzeichnet, dass** der plattenförmige Teil (7) auf seiner an den länglichen Körper (4) angrenzenden Seite (7') mindestens zwei Haken (11) aufweist, die einstückig mit diesem Teil (7) ausgebildet sind, und dass das Distanzstück (17) eine Befestigungsstelle (17') für die Haken (11) umfasst, beispielsweise in Form einer ausgeschnittenen Platte, so dass sie gemeinsam eine lösbare Bajonettverbindung bilden, die durch Drehen des plattenförmigen Teils (7) verriegelbar und entriegelbar ist, wobei die Verbindung aus Haken (11) und Stelle (17') im verriegelten Zustand der Verbindung durch elastische Beanspruchung des plattenförmigen Teils (7) eine Anlage gegen die eine Verkleidungshülle bildende Außenwand (15') gewährleistet.

14. Flüssigkeitsbehälter (14) nach einem der Ansprüche 11 bis 13, **dadurch gekennzeichnet, dass** der plattenförmige Teil (7) eine Kreisform hat und auf seiner an den länglichen Körper (4) angrenzenden Seite (7') eine Umfangsschürze (9) aufweist, wobei die Schürze (9) eine Lippendichtung bildet oder in einer solchen endet und gegebenenfalls eine am länglichen Körper (4) und zwischen der eine Verkleidungshülle bildenden Außenwand (15') und dem plattenförmigen Teil (7) montierte Dichtungsscheibe (10) umschließt.

15. Verfahren zur Herstellung eines Flüssigkeitsbehälters (14) nach einem der Ansprüche 11 bis 14, das im Wesentlichen darin besteht, ein dichtes Reservoir (15) bereitzustellen, das mit den verschiedenen Anschlüssen für die Heizung sowie die Zu- und Ableitung von Flüssigkeit ausgestattet ist, ein Tauchrohr (3) und ein Distanzstücks (17) mit einem geeigneten Durchgang für das Rohr (3) anzubringen, eine eine Außenhülle bildende Außenwand (15'), die geeignete Durchgangsöffnungen für die Anschlüsse und das Tauchrohr (3) und/oder das Distanzstück (17) aufweist, bereitzustellen und auf das Reservoir (15) aufzuschieben, eine obere (18) und eine untere Abdeckung (18') zum Schließen der Verkleidungshülle (15') anzubringen und ein schäumendes Material einzuspritzen, das dazu bestimmt ist, zu expandieren und eine Zwischenschicht aus Isoliermaterial (16) zwischen den beiden vorgenannten Wänden (15, 15') zu bilden, beispielsweise einen Polyurethanschaum,
wobei das Verfahren **dadurch gekennzeichnet ist, dass** es ferner darin besteht, eine Trägereinrichtung (1) nach einem der Ansprüche 1 bis 7, die mit mindestens einem, vorzugsweise mehreren Sensor(en) (2) zur Temperaturmessung oder -überwachung ausgestattet ist, durch Einführen durch das Distanzstück (17) und zumindest teilweises Einpassen in das Tauchrohr (3) anzubringen und gegebenenfalls durch Drehen in der Position zu verriegeln.

## Claims

1. Support device (1) for one or more temperature measuring or monitoring sensors (2) intended to be mounted at least partially in a dip tube (3), said support device (1) comprising an elongate profiled body (4) made of plastics material, with at least one housing (5) in the form of a longitudinal groove for receiving, preferably retaining by means of elastic stress and/or friction, at least one sensor (2) and for housing at least one adjoining part of its connecting cable (6), the support device (1) being **characterized in that** the elongate profiled body (4) has, at one of its ends **(4'),** a plate-shaped part (7) that is integrally formed therewith, extends in a plane perpendicular to the longitudinal axis (AL) of said body (4) and has at least one through-hole (8) aligned with said at least one groove (5).

2. Support device according to Claim 1, **characterized in that** the elongate profiled body (4) has at least two, preferably three, longitudinal grooves (5), which have identical or non-identical cross sections and are angularly distributed about the longitudinal axis (AL), each advantageously housing a sensor (2), the plate-shaped part (7) having just as many through-holes (8), each of which is respectively aligned with a groove (5).

3. Support device according to Claim 1 or 2, **characterized in that** the or each housing (5) has at least one site (5') for mounting a sensor (2) by clip-fastening.

4. Support device according to any one of Claims 1 to 3, **characterized in that** the plate-shaped part (7) has a circular shape and has a peripheral skirt (9) on its face (7') adjoining the elongate body (4), said skirt (9) consisting of or terminating in a lip seal.

5. Support device according to any one of Claims 1 to 4, **characterized in that** it also comprises a sealing washer (10) mounted on the elongate body (4) and against the plate-shaped part (7), and where appropriate inside a peripheral skirt (9) of this part (7), said washer (10) elastically closing off the one or more through-holes (8) of said plate-shaped part (7).

6. Support device according to any one of Claims 1 to 5, **characterized in that** the plate-shaped part (7) has, on its face (7') adjoining the elongate body (4), hooks (11) formed integrally with this part (7).

7. Support device according to any one of Claims 1 to 6, **characterized in that** the plate-shaped part (7) has, on its face (7") facing away from the elongate body (4), at least one hooking site (12) for driving this part (4) in rotation about the longitudinal axis (AL) of the elongate body (4).

8. Temperature measuring or monitoring device (13) for a liquid container (14), in particular of the hot water tank type, comprising a dip tube (3) of the thermowell type, at least one temperature measuring or monitoring sensor (2) and a support device (1) comprising an elongate profiled body (4) made of plastics material, said or each sensor (2) being received so as to be retained by means of elastic stress and/or friction in at least one housing (5) in the form of a longitudinal groove of said elongate body (4) as well as at least one adjoining part of its connecting cable (6), said support device (1) being at least partially mounted in a nested manner in the dip tube (3) with the or each sensor (2) being brought into contact with the wall of said tube (3),
the measuring or monitoring device (13) being **characterized in that** the support device (1) is a support device according to any one of Claims 1 to 7.

9. Measuring or monitoring device (13) according to Claim 8, **characterized in that** it comprises at least two, advantageously three, sensors (2), which are identical or non-identical and are each housed in a corresponding longitudinal groove (5).

10. Measuring or monitoring device (13) according to Claim 8 or 9, **characterized in that** only part of the elongate profiled body (4) is located in the dip tube (3), at least the part receiving the one or more sensors (2).

11. Liquid container (14), in particular a hot water tank, comprising an inner wall forming a sealed reservoir (15), an outer wall forming a casing shell (15') and an intermediate layer of insulating material (16) located between the two above-mentioned walls (15, 15'), for example a polyurethane foam, said container (14) being equipped with at least one temperature measuring or monitoring device (13) comprising a dip tube (3) of the thermowell type, at least one temperature measuring or monitoring sensor (2) and a support device (1) with an elongate profiled body (4) receiving said or each sensor (2) in at least one housing (5) as well as at least one adjoining part of its connecting cable (6), said support device (1) being at least partially mounted in a nested manner in the dip tube (3) while bringing the or each sensor (2) into contact with the inner wall of said tube (3), the temperature measuring or monitoring device (13) being installed on said container (14) such that it passes through the two walls (15, 15') of the latter and that at least one closed front portion (3') of the dip tube (3) is located in the reservoir (15),
the container (14) being **characterized in that** the or each temperature measuring or monitoring device (13) is a device according to any one of Claims 8 to 10, and **in that** the plate-shaped part (7) of the or each support device (1) forming part of the or each temperature measuring or monitoring device (13) bears, preferably under pressure, against the outer face of the casing shell (15').

12. Liquid container (14) according to Claim 11, **characterized in that** it comprises a spacer (17) arranged between the inner and outer walls (15 and 15') and serving as a sealed bulkhead fitting and through-hole bearing for the temperature measuring and monitoring device (13), this spacer (17) delimiting a sealed volume around the part of the dip tube (3) and/or of the elongate profiled body (4) extending between these two walls (15 and 15').

13. Liquid container (14) according to Claim 12, **characterized in that** the plate-shaped part (7) has, on its face (7') adjoining the elongate body (4), at least two hooks (11) integrally formed with this part (7) and **in that** the spacer (17) comprises a hooking site (17') for said hooks (11), for example in the form of a cutout plate, so as to jointly establish a detachable bayonet connection, which can be locked and unlocked by rotating said plate-shaped part (7), said site (17') for connecting the hooks (11) ensuring that the plate-shaped part (7) is pressed by means of elastic biasing against the outer wall forming a casing shell (15') when said connection is in the locked state.

14. Liquid container (14) according to any one of Claims 11 to 13, **characterized in that** the plate-shaped part (7) has a circular shape and has a peripheral skirt (9) on its face (7') adjoining the elongate body (4), said skirt (9) consisting of or terminating in a lip seal and where appropriate enclosing a sealing washer (10) mounted on the elongate body (4) and between the outer wall forming a casing shell (15') and the plate-shaped part (7).

15. Method for manufacturing a liquid container (14) according to any one of Claims 11 to 14, consisting essentially in providing a sealed reservoir (15), equipped with the various connections for heating, supplying and discharging liquid, in installing a dip tube (3) and a spacer (17) with a suitable passage for the tube (3), in providing and placing onto said reservoir (15) an outer wall forming a casing shell (15'), which has suitable passage openings for the connections and the dip tube (3) and/or the spacer (17), in installing upper (18) and lower (18') covers in order to close the casing shell (15'), and in injecting a foaming material that is intended to expand and to form an intermediate layer of insulating material (16) between the two above-mentioned walls (15, 15'), for example a polyurethane foam,
the method being **characterized in that** it also consists in installing, by means of insertion through the spacer (17) and at least partial nesting in the dip tube (3), and optionally in locking in position by means of rotation, a support device (1) according to any one of Claims 1 to 7, which is equipped with at least one, preferably a plurality of, temperature measuring or monitoring sensor(s) (2).
